# EUROPEAN PATENT SPECIFICATION

(11) **EP 3 885 650 B1**
(45) Date of publication and mention of the grant of the patent: **07.06.2023**
(21) Application number: 21165296.1
(22) Date of filing: 26.03.2021
(51) Int. Cl.: F23C 3/00, F23D 14/08, F23D 14/10, F23D 14/78, C03B 5/235, F23D 14/22, F23D 14/50, F23D 23/00, F23D 14/32

(54) **BURNER FOR A FURNACE FOR VITRIFIABLE MATERIALS AND PROCESS FOR MANAGING THE BURNER**
BRENNER FÜR EINEN OFEN FÜR VERGLASBARE MATERIALIEN UND VERFAHREN ZUR HANDHABUNG DES BRENNERS
BRÛLEUR D'UN FOUR POUR MATÉRIAUX VITRIFIABLES ET PROCÉDÉ DE GESTION DU BRÛLEUR

(30) Priority: 27.03.2020 IT 202000006502
(43) Date of publication of application: 29.09.2021
(73) Proprietor: Combustion Consulting Italy S.r.l., 37136 Verona (IT)
(72) Inventor: Boulanov, Oleg, 60180 Nogent-sur-Oise (FR)
(74) Representative: AWA Benelux

(56) References cited:
- EP-A1- 3 135 639
- WO-A1-2014/189502
- US-A- 3 260 587
- US-A1- 2013 086 949

## Description

The present invention relates generally to a burner for a furnace for vitrifiable materials. A furnace for vitrifiable materials comprising the aforementioned burner is also the subject of the present invention.

Vitrifiable materials are materials that are brought and/or maintained in a liquid state, in furnaces, within production processes to produce, for example, glass wool, glass fibre and, more generally, glass. The liquid mass of molten vitrifiable materials that is contained within the furnace is generally referred to as the "molten bath".

In order to bring the vitrifiable material to a temperature equal to or higher than its melting temperature, melting furnaces may be provided with one or more burners which develop thermal energy by burning a mixture of combustible and fuel. The burners are provided with one or more injectors to which a combustible and a fuel are fed, separately or pre-mixed with each other. A flame is made through one or more injectors which reaches, generally, a temperature comprised between about 1700°C and 2700°C, so as to bring and maintain the temperature of the molten bath around 1300-1600°C. In order to withstand these temperatures, the burners are made of materials such as stainless steel, other high temperature resistant steels or ordinary steel with a special coating, and generally comprise a water jacket, i.e. a cooling circuit.

In particular, so-called "submerged" burners can be used, i.e. arranged below the free surface of the molten bath. The flame generated by an injector of a submerged burner is therefore produced within the molten bath and, consequently, also the hot gases resulting from the combustion are emitted below the free surface of the molten bath. For this reason, at the outlet of an injector of a submerged burner, the hot gases resulting from the combustion cause bubbles to form within the molten bath.

This is particularly advantageous from the point of view of heat exchange efficiency. In fact, the formation of bubbles increases the heat exchange surface between the hot gases resulting from the combustion and the molten bath and induces a turbulent motion in the latter, which promotes the mixing of the hot gases resulting from the combustion and the molten bath.

However, the turbulent motion of the molten bath within the furnace adversely affects the service life of submerged burners. In particular, the turbulent motion of the molten bath within the furnace accelerates the wear of a submerged burner and, therefore, reduces the service life thereof.

On the one hand, since the molten bath has a highly corrosive basic chemical composition and is brought, and maintained, at a high temperature, the turbulent motion causes the stirring of corrosive material at high temperatures. This results in frictional wear and corrosion of the surfaces, like the walls of the furnace and the burners, with which the molten bath comes into contact at high speed. This phenomenon is even more aggressive especially near the burners, where the turbulent motion is more vigorous.

On the other hand, the continuous stirring of the molten bath, due to the turbulent motion, also causes the alternating contact of the burner with masses of molten material or gas at different temperatures. In other words, the burner is continuously subjected to thermal shocks, which tend to cause cracks or fractures to form on it. The cracks or fractures can sometimes be so deep that they reach the cooling circuit and cause a loss of the coolant circulating in it.

The effect of wear and/or the presence of cracks can cause serious damage to the submerged burner, to the point of affecting one or more injectors, so much so as to require the complete replacement of the burner itself.

Relating burners are known from US 2013/086949 and US3260587, which however do not disclose a plurality of injectors arranged to form a straight line or arranged offset from a straight line, a cover assembly comprising a shell body removably surrounding at least part of each injector, and at least one base stably associated with said plurality of injectors. A further related burner of the prior art is known from EP3135639, disclosing a plurality of injectors in a cooling enclosure, but at least not that each injector has a combustion chamber in communication with the melting chamber through a communication mouth.

The present disclosure aims to make available a burner which allows to overcome the aforementioned drawbacks with reference to the prior art and/or to achieve further advantages. Further, it is further disclosed herein that a furnace and a process for managing a burner can overcome the aforementioned drawbacks with reference to the prior art and/or achieve further advantages. The burner according to the present invention is apt to be used as a submerged burner, solving the above mentioned drawbacks, but is advantageously usable also as a non-submerged burner.

This is achieved by a burner, a furnace comprising the burner and a management process as defined in the respective independent claims. Secondary features and particular embodiments of the object of the present invention are defined in the corresponding dependent claims.

As anticipated, the present invention relates to a burner for a furnace for vitrifiable materials, comprising a tank having a plurality of walls defining a melting chamber. The burner according to the present invention comprises a plurality of injectors, each of which is configured to generate, in use, a flame within said melting chamber. In the context of the present disclosure, where used, the expression "at least one injector" refers to each injector of the plurality of injectors.

In particular, according to the present invention each injector has a combustion chamber configured to be in fluid communication with the melting chamber through a communication mouth, an oxidant feeding circuit through an oxidant inlet, and a combustible feeding circuit through a combustible inlet. The combustion chamber is, therefore, open to the melting chamber, to an oxidant feeding circuit and to a combustible feeding circuit. In other words, each injector is provided with a combustion chamber which is fluidically connected with an oxidant feeding circuit, through an oxidant inlet, and with a combustible feeding circuit, through a combustible inlet. The meeting of oxidant and fuel within the combustion chamber gives rise to a combustion, which develops thermal energy in the form of a flame. The combustion chamber is in fluid communication with the melting chamber, i.e. it is open to the melting chamber through a communication mouth. Since the combustion chamber is fluidically connected to the melting chamber of the tank, the flame developed therein can reach, or approach, the vitrifiable material within said melting chamber.

The burner according to the present invention additionally comprises: a base, a cover assembly, comprising in turn a shell body and a cooling circuit.

As mentioned, the burner further comprises, at least one base. The plurality of injectors is stably associated with said base to form an injection assembly. In other words, the injection assembly comprises a base to which the plurality of injectors is fixed.

The injectors are stably associated with the base and are arranged to form a straight line, or, are arranged offset from a straight line. In other words, the injection assembly comprises a plurality of injectors, arranged along a straight line or offset from a straight line, fixed to said base. The association of multiple injectors to a single base facilitates the simultaneous association or disassociation thereof from the shell body. In other words, by manipulating the base alone, it is possible to substantially simultaneously separate the plurality of injectors from the shell body. As a result, maintenance and replacement operations of the burner, in particular of the shell body, are made easier and faster. The presence of a plurality of injectors advantageously increases the ability of the burner to generate, and thus supply, thermal energy to the melting chamber. In addition, their arrangement along a straight line or substantially offset along a straight line allows maximizing thermal convection, for the same use of combustible and oxidant, and a better control over thermal convection.

As anticipated, the burner further comprises a cover assembly. The cover assembly in turn comprises a shell body and a cooling circuit configured to allow the circulation of a cooling fluid within the shell body.

In particular, the shell body removably surrounds at least part of each injector and is apt to be associated with a wall of the furnace to allow a connection of each injector with the wall of the tank. That is, the shell body is removably associated with the injection assembly; that is, the shell body and the injection assembly are reversibly couplable. In other words, the injection assembly is removably associated with the shell body of the cover assembly.

That is, each injector is at least partially surrounded by the shell body. Each injector of the burner according to the present invention is, at least partially, surrounded by the shell body and is placed in fluid communication with the melting chamber. In addition, each injector is cooled thanks to the presence of the cooling circuit within the shell body. Each injector is, in fact, cooled by contact with the shell body, which in turn is cooled by means of the cooling circuit. In this way, each injector, a rather delicate component, is particularly safeguarded.

According to the present invention, the shell body and each injector, are made as physically distinct elements or bodies mechanically coupled to each other in a reversible manner. Since the shell body of the burner according to the present invention is reversibly or removably associated with the at least one injector, it follows that it is possible to separate or disconnect the at least one injector and the shell body without damage or impairment of their functionality. In this way, for example, the injection assembly can be separated from the shell body during maintenance operations. In use each injector is preserved by the shell body and therefore each injector is reusable. In fact, the shell body only will be damaged due to prolonged contact or proximity to the molten bath. To restore the functionality of the entire burner it will then simply be necessary to replace the damaged cover assembly with a new one. As a result, advantageously, the useful life of the at least one injector is extended, as the injector can be used again by coupling it to a new cover assembly.

Therefore, when a burner is identified as damaged, it is possible to replace the cover assembly only. In fact, the burner according to the present invention allows replacing the cover assembly only, in particular the shell body, with respect to the at least one injector. In other words, servicing a burner according to the present invention requires performing a selective replacement of only the damaged shell body. It is therefore possible to restore the functionality of the entire burner by replacing only the shell body. This advantageously results in cost savings because the at least one injector, a critical and delicate component, is preserved while it is sufficient to replace the shell body. This saving becomes even more significant if the burner according to the present invention is used as a submerged burner and considering that on average the useful life of a traditional submerged burner can be rather short, i.e. of the order of 3-4 months, and therefore such replacements must be carried out rather frequently.

In addition, the dissociation of the entire injection assembly from the shell body may advantageously allow for a facilitated extraction or separation of the plurality of injectors from the shell body, i.e., with respect to the shell body.

A further advantage deriving from the burner according to the present invention consists in being able to make the cover assembly and the plurality of injectors of different materials according to the needs and operating conditions to which the burner is to be subjected.

Moreover, as anticipated, the contact or proximity with the molten bath, which is in continuous turbulent stirring, subjects the shell body to temperature changes that can lead to the formation of internal stresses in the material making up the shell body itself. Such internal stresses may propagate from one zone to another of the material making up the shell body and induce a deformation or degradation of the shell body itself. If the burner were made as an integral body, that is with continuity of material between the shell body and each injector, these internal stresses could reach the latter. Advantageously, in the burner according to the present invention the shell body and the injection assembly are distinct bodies or elements; therefore, since there is no continuity of material between each one injector and the shell body, no internal stresses in the material constituting the shell body can therefore be transmitted to the material constituting each injector, and vice versa. In other words, any internal stresses remain confined within the shell body without risk of damaging one or more injectors due to them.

In addition, maintenance operations are made particularly simple and easy through the association by reversible coupling between the cover assembly, in particular the shell body, and each injector.

According to a preferred aspect of the present invention, the shell body comprises a plurality of seats. Each seat is apt to at least partially accommodate within itself an injector of said plurality of injectors. In particular, the number of seats of the plurality of seats is equal to the number of injectors of the plurality of injectors. It follows that, in use, each injector is housed at least partially within a respective seat.

According to a preferred aspect of the present invention, the shell body is a hollow box-like body having an inner wall which delimits each seat of the plurality of seats. Each seat can be configured as a through hole. That is, the shell body may be a box-like body having multiple cavities, delimited by the inner wall of the shell body itself, which act as seats for accommodating or enclosing at least partially respectively an injector of the plurality of injectors. In other words, each injector is, at least in part, accommodated within a respective cavity, i.e., a seat, of the shell body.

According to a preferred aspect of the present invention, the inner wall has a thickness of at least about 3-4 mm and is configured to be interposed between the cooling circuit and each injector. That is, the inner wall is located between the cooling circuit and each injector. In other words, the cooling circuit is not in direct contact with the seat intended to accommodate each injector. Therefore, the inner wall prevents the direct contact of each injector, which, as anticipated, is a particularly delicate component of the burner, with a circuit within which the cooling fluid is circulated. The inner wall preferably has a thickness of at least 3 mm and 4 mm. That is, 3-4mm is preferably the minimum thickness of the inner wall. This thickness has been empirically proven to be, on the one hand, the minimum thickness to ensure that even in the event that the shell body deteriorates so much as to give rise to the formation of cracks, they do not propagate from side to side of the inner wall. On the other hand, this thickness has also proved to be the maximum thickness to ensure a thermal exchange between each injector and the cooling circuit sufficient to allow an effective cooling of each injector. In this way, it is thus advantageously prevented or at least limited the risk of spillage, or any leakage or loss, of the cooling fluid from the cooling circuit within the seat for each injector from occurring and, at the same time, the heat exchange between the cooling circuit and each injector is ensured.

According to a preferred aspect of the present invention, the shell body may comprise a plurality of parts configured to be reversibly coupled together to obtain a single piece. In other words, the shell body may be formed from a plurality of parts reversibly coupled together to make said one piece or an individually manipulable piece. In this way, it is advantageously possible to selectively replace one or more damaged parts that need to be changed. Thus, overall, the useful life of the burner according to the present disclosure can be further extended. In addition, according to this preferred aspect, since the shell body is not made as an integral piece, i.e. a monobloc, internal stresses that may develop within the material constituting one of the parts of the shell body cannot be transmitted to the other parts of the shell body, as well.

According to a further preferred aspect, the shell body comprises an upper wall, intended in use to face the melting chamber, and a plurality of ribs projecting from said upper wall. In other words, the shell body comprises a wall configured to face towards the melting chamber and a plurality of ribs that project, overhang or protrude from the upper wall toward the melting chamber. Such ribs may advantageously act as retaining elements for the devitrified material, especially in case the burner according to the present invention is used as a submerged burner. In this case, advantageously, the presence of the ribs contributes to the stabilization of the layer of devitrified material, which is formed during the operation of the furnace, on the upper wall of the shell body, preventing or reducing the risk of detachment of the latter. According to a further preferred aspect, the ribs are incident with respect to the straight line along which or with respect to which the injectors of the plurality of injectors are arranged. In other words, the ribs projecting from the upper wall of the shell body are arranged so as not to be parallel to the straight line along which or with respect to which the injectors are arranged. That is, the ribs are arranged transverse to the straight line along which or with respect to which the injectors are arranged.

According to a preferred aspect of the present invention, the burner comprises an adjusting element, housed in said combustion chamber, and configured to engage at least in part said combustion chamber to vary a hollow space or free space of the combustion chamber. Free space or hollow space of the combustion chamber means the portion or region within which the flame develops. In particular, the hollow space is defined as the space interposed, i.e., included, between the communication mouth and the adjusting element. The size of the free space or hollow space therefore depends on the distance of the adjusting element from the communication mouth of the combustion chamber. By varying the size of the free space, it is possible to adjust the distance at which the flame develops with respect to the melting chamber. This is particularly advantageous since, depending on the composition of the molten bath, it may be useful to increase or decrease the contact of the flame with the vitrifiable material. Advantageously, it is therefore possible to vary the distance of the flame from the melting chamber, for example between one melting cycle and the next, depending on the composition of the vitrifiable material to be melted or maintained in the molten state.

According to a preferred aspect of the present invention, the adjusting element is apt to assume a closure position, where it closes a fluid communication at least between the combustion chamber and the oxidant feeding circuit and the combustible feeding circuit. In other words, the adjusting element is apt to be positioned within the combustion chamber so as to obstruct at least the oxidant inlet and the combustible inlet. In other words, the adjusting element is apt to occupy or assume a position such that a fluid communication between the combustion chamber and the melting chamber is prevented, or closed. It follows, that, in particular when the burner according to the present invention is employed as a submerged burner, a molten bath entry within the oxidant feeding circuit and the combustible feeding circuit can be prevented. This is particularly advantageous in order to prevent, during furnace downtime, in particular in the case of an emergency stop, that part of the molten bath still contained inside the melting chamber entering the combustion chamber, may reach the inlet of the oxidant feeding circuit and of the combustible feeding circuit and may solidify inside them.

According to a preferred aspect of the present invention, in said closure position the adjusting element protrudes from the combustion chamber into the melting chamber. That is, in said closure position, the adjusting element comes out or overhangs with respect to the injection chamber into the melting chamber. This is particularly advantageous in the case where, the burner according to the present invention is employed as a submerged burner and during a furnace downtime, some vitrifiable material has solidified within the free space of the combustion chamber. In this case, in fact, by moving the adjusting element up to said closure position, it is possible to crush the solidified material, expel it from the combustion chamber and restore the functionality of each injector.

According to a preferred aspect of the present invention, the stem extends between a head end and an opposite bottom end, wherein the head end faces towards the communication mouth and can have a tapered or flat configuration. In other words, the head end may have a tapered or sharp shape. This facilitates the crushing of any material that has solidified within the free space of the combustion chamber during furnace downtime. Furthermore, this aspect may be useful in case there is a need to modify the turbulent motion within the melting chamber. In such a case, the overhanging head end could act as a disturbing or deflection element within the molten bath and, therefore, change its course.

According to a preferred aspect of the present invention, the adjusting element of each injector is movable independently of the adjusting element of the other injectors or is movable together with the adjusting element of the other injectors. That is, the adjusting element of each injector may or may not be moved simultaneously with respect to the adjusting elements of the other injectors of the plurality of injectors of the burner. This allows choosing whether or not to adjust the free space of each injector at the same time. In other words, it is possible to increase or decrease the volume of free space within the combustion chamber together for all injectors of the injection assembly, or it is possible to adjust the volume of free space within the combustion chamber independently for each single injector. In particular, if the adjusting element of each injector is made so as to be movable together with the adjusting element of the other injectors, this is particularly useful in case the burner is a submerged burner: in case of an emergency stop of the furnace it is possible to bring all the adjusting elements to a closure position at the same time, safeguarding all the injectors in the same way.

According to a preferred aspect of the present invention, the burner is a submerged burner. That means that the burner according to the present invention is preferably apt to be used as a submerged burner. In other words, the burner according to the present invention is preferably apt to be associated with a wall of the tank of the furnace for vitrifiable materials so as to result, in use, in a "submerged" position or below the free surface of the vitrifiable material in the molten state. In this case, the shell body of the burner is intended to be placed, at least initially during use, in contact with the vitrifiable material in the fluid state. In use, the plurality of injectors is therefore not placed directly in contact with the vitrifiable material contained in said melting chamber. In use, a plurality of injectors is not in direct contact with the molten bath since it is protected by the shell body, against the devitrified material solidifying on the shell body, or it is protected against the combustion gas, i.e., the flame, which is generated by each injector.

The present invention also relates to a furnace for vitrifiable materials comprising a tank having one or more walls defining a melting chamber and a burner, according to one or more of the aspects outlined heretofore and better presented in detail below.

According to a preferred aspect of the present invention, the burner is associated with a wall of the tank of the aforesaid furnace so that, in use, it is below the free surface of the molten vitrifiable material. In other words, the burner is associated or coupled to one of the walls of the tank in a position such that it is, in use, below the free surface of the vitrifiable material in the liquid state. The burner included in the aforesaid furnace is therefore apt to act as a submerged burner.

According to a preferred aspect of the present invention, the furnace for vitrifiable materials comprises an oxidant feeding circuit and a combustible feeding circuit configured to supply respectively the plurality of injectors of the at least one burner with the oxidant and the combustible in a liquid state or in a gaseous state. In other words, the furnace comprises a combustible supply circuit and an oxidant supply circuit configured to feed combustible and oxidant to each injector, respectively. Preferably, the combustible supply circuit and the oxidant supply circuit are separate from or independent of each other. Depending on the temperature at which the combustible and oxidant are supplied, they are in the liquid or gaseous state.

Finally, the present invention further relates to a process for managing a burner, as defined heretofore, in a furnace for vitrifiable materials comprising a tank having a plurality of walls defining a melting chamber. This process comprises the steps of:
- making a fluid communication between a plurality of injectors and said melting chamber and generating a flame within the melting chamber through said plurality of injectors,
- removably connecting said plurality of injectors to a shell body and at least partially surrounding said plurality of injectors with said shell body,
- removably connecting said plurality of injectors to one of the walls defining said melting chamber through the shell body,
- placing in fluid communication said plurality of injectors with an oxidant feeding circuit and a combustible feeding circuit,
- feeding said plurality of injectors with oxidant and with combustible in a liquid or gaseous state.

Preferably, the process provides for independently or separately supplying oxidant and combustible in a liquid or gaseous state to each injector.

According to a preferred aspect of the present invention, the aforesaid process further comprises the step of removing the shell body from the plurality of injectors in case of need for removal and of at least partially replacing the shell body removed with a new shell body or a new portion of the shell body. In other words, the process preferably includes removing, if damaged, the shell body and replacing the shell body removed with a new shell body or replacing a portion thereof. That is, the process advantageously further provides for replacing a shell body removed with a new shell body or replacing a portion of a shell body removed body with a new portion of shell body to restore the functionality of the burner.

According to a preferred aspect of the present invention, the aforesaid process further comprises the steps of providing for each injector of the plurality of injectors an adjusting element, moving said adjusting element inside said one injector of the plurality of injectors to adjust the distance of the flame generated by said injector of the plurality of injectors with respect to the melting chamber. In other words, the process includes a step of varying or adjusting the free space within the combustion chamber, with consequent advantages already explained.

Finally, according to a preferred aspect of the present invention, the aforesaid process further comprises the step of moving said adjusting element inside an injector of the plurality of injectors to close at least one fluid communication between said injector of the plurality of injectors and the melting chamber and/or to close a fluid communication between said injector of the plurality of injectors and said oxidant feeding circuit and said combustible feeding circuit. Thus, the process further envisages preventing a fluid communication between a combustion chamber and the melting chamber and/or between the combustion chamber and the oxidant feeding circuit and the combustible feeding circuit, with the advantages already explained being obtained.

Further advantages, features and methods of use of the object of the present invention, will become evident from the following detailed description of the embodiments thereof, presented by way of non-limiting example.

It is however evident that each embodiment of the object of the present invention can present one or more of the advantages listed above; however, each embodiment is not required to simultaneously present all the listed advantages.

Reference will be made to the figures of the accompanying drawings, in which:
- Figure 1 represents a schematic sectional view of a plurality of burners according to the present invention associated with a tank of a furnace for vitrifiable materials;

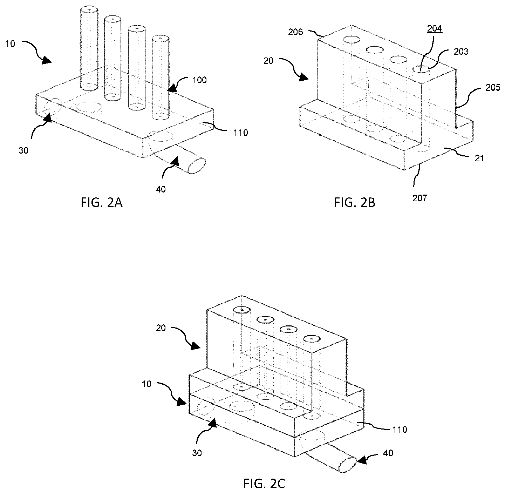

- Figure 2A represents a schematic perspective view of an injection assembly according to the present invention;
- Figure 2B represents a schematic perspective view of a cover assembly according to the present invention (the cooling circuit is not visible);
- Figure 2C represents a schematic perspective view of a burner according to the present invention (the cooling circuit is not visible);

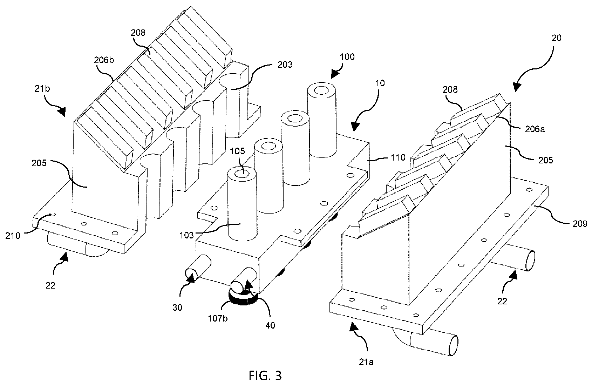

- Figure 3 represents a perspective view of a burner according to the present invention;

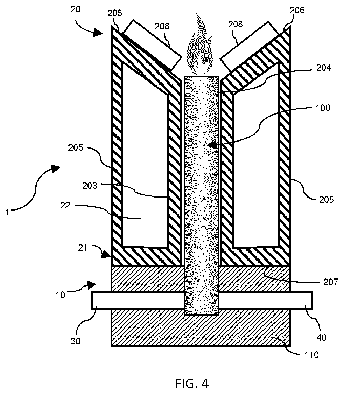

- Figure 4 represents a schematic partial sectional view of a burner according to the present invention;

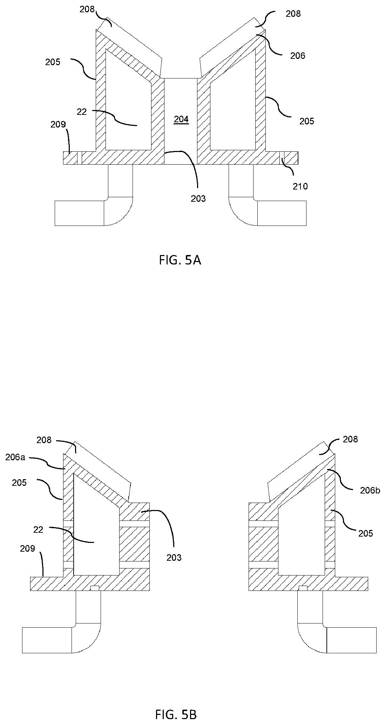

- Figures 5A and 5B represent a partial sectional view of a cover assembly according to the present invention;

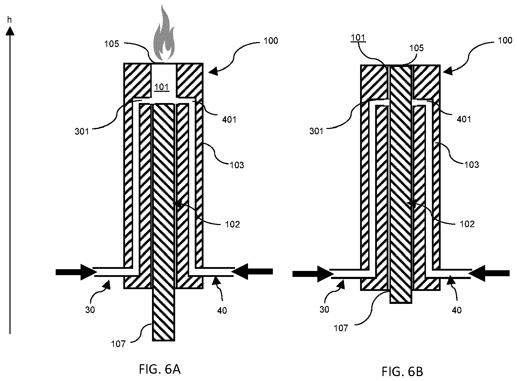

- Figure 6A and 6B show a schematic sectional view of an injector according to the present invention, wherein the stem is in a first position and a second position, respectively;

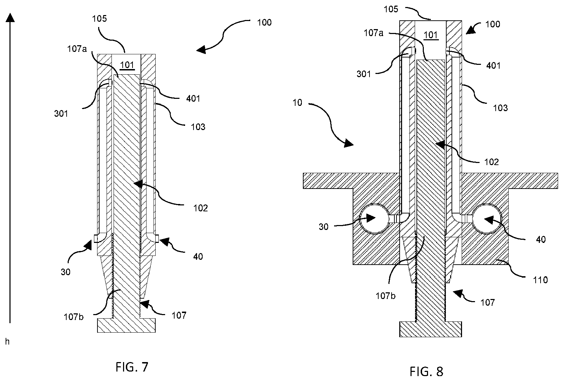

- Figure 7 shows a sectional view of an injector according to the present invention;
- Figure 8 represents a sectional view of an injection assembly according to the present invention.

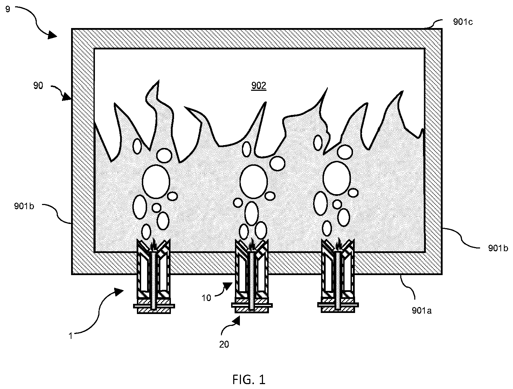

With reference to the attached Figure 1, an embodiment of a furnace for vitrifiable materials according to the present invention is collectively referred to as reference numeral 9.

In the context of the present disclosure, a furnace for vitrifiable materials is defined as an apparatus apt to heat vitrifiable material up to bringing it to a liquid state, and/or maintaining the vitrifiable material in a liquid state. The furnace 9 for vitrifiable materials is, therefore, apt to melt vitrifiable material up to bringing it to a liquid state, and/or maintaining it in such a state. In particular, within the scope of the present invention, vitrifiable material refers to all raw materials that can be processed into glass or have the properties of glass. Vitrifiable materials generally comprise oxides (such as, for example, Si, Ca, K, Mr, Mn, Fe) that are introduced into the composition of the filler. The furnace 9 for vitrifiable materials comprises a tank 90. Said tank 90 includes, in turn, one or more walls 901 mutually associated to form a melting chamber 902, within which, in use, the molten bath is contained. In particular, the melting chamber 902 may be delimited by a bottom wall 901a, one or more side walls 901b, an upper wall 901c, opposite to said bottom wall 901a. The walls 901 may be provided with a protective coating, which may include one or more layers of insulating or heat-removing coating, such as coating layers of refractory material, placed internally to the melting chamber 902 as a shield to high temperatures. As anticipated, in fact, the molten bath is brought and maintained at a temperature of about 1300-1600°C.

The walls 901 may be provided with at least one site for housing a burner 1. Indeed, the furnace 9 for vitrifiable materials comprises at least one burner 1 according to one or more aspects of the present invention defined below. The at least one burner 1 is associated or associable with a wall 901a, 901b, 901c of the tank 90. The burner 1 is apt to be associated in various positions with a wall 901 of the tank 90. In particular, burner 1 is apt to act as a "submerged burner". That is, the burner 1 can be associated with or coupled to a wall 901 of the tank 90 so that, in use, it results below the free surface of the vitrifiable material, i.e., the molten bath. To this end, preferably, the at least one burner 1 is associated or associable with a bottom wall 901a or a side wall 901b of the tank 90.

In accordance therewith, the expression "submerged burner" means, within the scope of the present invention, a burner 1 apt to be associated with a wall 901 of a tank 90 of a furnace 9 for vitrifiable materials so as to be arranged, in use, below the free surface, i.e., the surface or level, of the molten bath. Thus, the submerged burner generates and transfers thermal energy directly within the molten bath.

In addition, according to a particular aspect of the present invention, the furnace 9 for vitrifiable materials comprises an oxidant feeding circuit 30 and a combustible feeding circuit 40, apt to feed the at least one burner 1 with oxidant and combustible, respectively. The oxidant feeding circuit 30 and the combustible feeding circuit 40 are apt to supply the oxidant and the combustible, respectively, to the at least one burner or 1 so that thermal energy is developed in the form of a flame. In other words, the mixing of combustible and fuel inside the burner 1 results in a combustion phenomenon from which a flame derives. The oxidant feeding circuit 30 and the combustible feeding circuit 40 are configured to be in fluid communication with the at least one burner 1, and in particular with each injector 100 of the at least one burner 1.

According to a preferred aspect of the present invention, the oxidant feeding circuit 30 and the combustible feeding circuit 40 are configured to supply the injection assembly 10 of the at least one burner 1 with the oxidant and the combustible in a liquid state or in a gaseous state. Preferably, the combustible supply circuit 40 and the oxidant supply circuit 30 are separate from or independent of each other.

The oxidant can be fed in the liquid state (for example, oxygen reaches the liquid state at a so-called cryogenic temperature equal to -182°C) or in the gaseous state, for example at "room" temperature or at a temperature of about 600°C (preheated). Within the scope of the present invention, oxygen, air or air with added oxygen may be used as the oxidant. In addition, hydrogen peroxide, or other element or mixture which may be in a liquid state at "room" temperature, may otherwise be used as an oxidant.

The fuel can be fed in the liquid state (for example natural gas reaches the liquid state at a cryogenic temperature of -160°C) or in the gaseous state, at "room" temperature, or preheated 400°C. Kerosene, gasoline or other chemical elements or mixtures which may be in a liquid state at "room" temperatures may also be fed as the fuel. In the context of the present invention, the term "room" temperature means a temperature range comprised from about 20°C to about 40°C. In addition, natural gas, propane, butane, hydrogen, carbon monoxide and/or a mixture thereof (e.g., Syngas) may be used as combustible.

In particular, if the oxidant feeding circuit 30 and/or the fuel feeding circuit 40 are configured to respectively feed the oxidant or the fuel at a temperature lower than the temperature at which the injector is generally operating, then advantageously in this way, sending oxidant and/or combustible may contribute to further cooling each injector 100. This temperature at which the burner generally operates can be identified by an expert in the art. That is to say that a person skilled in the art is able to understand what the temperature or temperature range is at which a burner normally operates.

According to the present invention, the furnace 9 for vitrifiable materials is further provided with a cooling system (not shown in the figures) configured to let a cooling fluid, such as water, circulate within a cooling circuit of the at least one burner 1. In other words, the cooling system is configured to feed the cooling circuit of the at least one burner 1.

According to the present invention, the burner 1 comprises a plurality of injectors. Where used, the expression "at least one injector" refers to each injector 100 part of the plurality of injectors. Each injector 100 is configured to generate, in use, a flame within the melting chamber 902. In other words, each injector 100 is configured to develop thermal energy, in the form of a flame, to be transferred to the melting chamber 902. In particular, each injector 100 is configured to develop, in use, thermal energy in the form of a flame within the melting chamber 902. To this end, each injector 100 has a combustion chamber 101 configured to be in fluid communication with the melting chamber 902. That is, the combustion chamber 101 is configured to be open to the melting chamber 902. Thus, the combustion chamber 101 has a communication mouth 105 through which the flame can reach the melting chamber 902 and melt, and/or maintain in a liquid state, the vitrifiable material contained within the latter. The combustion chamber 101 is, moreover, fluidically connected to the oxidant feeding circuit 30 and to the combustible feeding circuit 40 of the furnace 9 for vitrifiable materials. Said differently, the oxidant feeding circuit 30 and the combustible feeding circuit 40 are open within the combustion chamber 101. In particular, the combustion chamber 101 is in fluid communication with the oxidant feeding circuit 30 through an oxidant inlet 301 and with the combustible feeding circuit 40 through a combustible inlet 401.

The burner 1 further comprises a cover assembly 20, in turn including a shell body 21 and a cooling circuit 22, configured to allow the circulation of a cooling fluid within said shell body 21. In particular, the shell body 21 is configured to removably surrounds at least part of each injector 100. The shell body 21 and the at least one injector 100 are removably or reversibly connected such that each injector 100 is housed or received, at least partially, within the shell body 21. As a result of the coupling, therefore, each injector 100 is enclosed at least partially by the shell body 21. In this manner, the shell body 21 acts as a housing for each one injector 100. The shell body 21 is, in fact, configured to house or receive each one injector 100. Preferably, each injector 100 is enclosed completely by the shell body 21.

Further, according to the present invention, the shell body 21 is apt to be associated with a wall 901 of the tank 90 to allow a connection of each injector 100 to the wall 901 of the tank 90. The shell body 21 is apt to be coupled to a wall 901 of the tank 90 to make possible a connection of each injector 100 with the wall 901.

In particular, the shell body 21 is apt to be associated or coupled to a wall 901 so as to face the melting chamber 902 of the furnace 9 for vitrifiable materials and result, in use, in contact or near the molten bath. In particular, at least part of the shell body 21, in use, therefore communicates, i.e. is in direct contact, with the melting chamber 902. Each injector 100 being received at least partially within the shell body 21, the latter acts as a protective element for each injector 100 with respect to the environment of the melting chamber 902. The shell body 21 is, in fact, configured to protect each injector 100 against the proximity to the molten bath and allow it to be cooled by the cooling circuit 22. Preferably, each injector 100 is enclosed completely by the shell body 21. In this way, both the protection effect offered by the shell body 21 and the cooling effect offered by the cooling circuit 22 are increased.

As mentioned above, the shell body 21 is apt to be associated with or coupled to a wall 901 of the tank 90 of the furnace 9 for vitrifiable materials. In other words, through the shell body 21 it is possible to associate or couple each injector 100 to the wall 901 of the tank 90 of the furnace 9 for vitrifiable materials. Each injector 100 is therefore couplable or associable with a wall 901 of the tank by means of the shell body 21. That is, each injector 100 is indirectly couplable or associable with a wall 901 of the tank through the shell body 21. In particular, according to the present invention, the shell body 21 can be reversibly couplable or associable with a wall 901 of the tank 90. That is, the shell body 21 may be decoupled or disassociated from the wall 901 of the tank 90, by mechanical disassembly or mechanical disconnection, without breaking or compromising the structural integrity of the parts thereof. Each injector 100 being indirectly coupled to a wall of the tank 90 by means of, or through, shell body 21, decoupling the latter from the wall 901 allows the separation of the shell body 21 and of each injector 100, to allow the maintenance of burner 1. Furthermore, preferably, the reversible coupling of the shell body 21 may be made so as to provide a sufficiently stable association between each injector 100 and the wall 901 of the tank 90 so as to allow the relative position between them to be maintained. In this way, accidental or inadvertent detachment of the burner 1 from the wall 901 is prevented.

According to this same preferred aspect, each injector 100 is removably associated with the shell body 21 of the cover assembly 20. According therefore to this aspect, the burner 1 is a modular body comprising each injector 100 and a cover assembly 20 having a shell body 21, wherein said shell body 21 and each injector 100 are coupled or associated with each other by means of a removable type coupling. The burner 1 is, therefore, a composable body or one that can be assembled by coupling the shell body 21 with each injector 100. In other words, the shell body 21 and each injector 100 are apt, in use, to form a monolithic body, i.e., a single or individually manipulable piece. The reversible coupling is, preferably, made so as to ensure a sufficiently stable association between each injector 100 and the shell body 21 so as to allow the relative position between them to be maintained. In other words, the shell body 21 and each injector 10 may be configured to achieve a stable coupling; that is, a coupling that is strong, not loose, not slack, and not accidentally loosening. In this way, accidental or inadvertent detachment or decoupling of the shell body 21 from each injector 100, and vice versa, can be avoided or prevented. Further, as a result of the coupling, each injector 100 and the shell body 21 may be decoupled or disassembled from each other, by mechanical disassembly or mechanical disconnection, without breaking or compromising the structural integrity of the parts. Being reversibly or removably coupled, the separation of the shell body 21 from each injector 100 allows each injector 100 and the shell body 21 to be separated or disconnected without damage or impairment of their functionality. Thus, for example, as part of maintenance operations, it is possible to separate each injector 100 from the shell body 21 damaged by contact with or proximity to the molten bath and replace the latter with a new shell body 21. It follows that, advantageously, the burner 1 according to the present invention is apt to allow the separation and the replacement of the cover assembly 20, in particular of the shell body 21, with respect to each injector 100.

According to a preferred aspect of the invention, the burner 1 is apt to be associated with a wall 901 of the tank 90 of a furnace 9 for vitrifiable materials such that in use it is below the "free surface" of the molten bath contained within the melting chamber 902. That is, the burner 1 is particularly apt to be employed or used as a submerged burner. The burner 1 according to the present invention is, therefore, particularly suitable for use as a submerged burner.

In particular, where the burner 1 according to the present invention is associated with the furnace 9 so as to act as a submerged burner, the shell body 21 is intended to be placed, at least in the initial stages or moments of use, in contact with the vitrifiable material in the liquid state. In such a case, each injector 100, although always resulting, in use, in communication with the melting chamber 902, is not in direct contact with the molten bath since it is protected by the shell body 21, against the devitrified material which tends to solidify on the shell body 21, or is further protected against the combustion gas, i.e. the flame, which is generated by the same injector 100.

According to the present invention, the burner 1 further comprises at least one base 110 in which each injector 100 is stably associated to form an injection assembly 10. That is, the burner 1 comprises an injection assembly 10 and in turn, each injector 100 is part of the injection assembly 10. Thus, the injection assembly 10 comprises each injector 100 and a base 110 stably associated with each other. The base 110 and each injector 100 are fixed to each other to form a single or individually manipulable piece. According to this same preferred aspect, the injection assembly 10 is removably associated with the shell body 21 of the cover assembly 20. According therefore to this aspect, the burner 1 is a modular body comprising an injection assembly 10 and a cover assembly 20 having a shell body 21, wherein said shell body 21 and the injection assembly 10 are coupled or associated with each other by means of a removable type coupling. The burner 1 is, therefore, a composable body or one that can be assembled by coupling the shell body 21 with the injection assembly 10. In other words, the shell body 21 and the injection assembly 10 are apt to form a monolithic body, i.e., a single or individually manipulable piece. The reversible coupling is, preferably, made so as to ensure a sufficiently stable association between each injector 100 and the shell body 21 so as to allow the relative position between them to be maintained. For example, the injection assembly 10 and the cover assembly 20 may be coupled through reversible coupling means, such as reversible coupling means known as, for example, threaded reversible coupling means. Being reversibly or removably coupled, the separation of the shell body 21 from the injection assembly 10 allows each injector 100 and the shell body 21 to be separated or disconnected from each other without damage or impairment of their functionality. In this way, for example, as part of maintenance operations, it is possible to separate the injection assembly 10 from the shell body 21 damaged by contact with the molten bath and to replace the latter with a new shell body 21. It follows that, advantageously, the burner 1 according to the present invention is apt to allow the separation and the replacement of the cover assembly 20, in particular of the shell body 21, with respect to the injection assembly 10.

According to the present invention, the burner 1, is a "linear" type burner. The injectors of the plurality of injectors are positioned along a straight line or offset from a straight line. In other words, the injection assembly includes a plurality of injectors 100 associated with the base and aligned with each other i.e. arranged one another in a row, or form a straight line. Said still differently, the injection assembly 10 comprises a row of injectors 100. Alternatively, the plurality of injectors 100 may be arranged such that the injectors 100 of the plurality of injectors are offset from each other from a straight line. Said in different words, the injectors 100 of the plurality of injectors may be arranged in a zig-zag pattern with respect to a straight line. Preferably, the injectors 100 of the plurality of injectors are equally spaced from each other, so as to ensure a better distribution of thermal energy during operation of the burner 1.

According to a preferred aspect, the shell body 21 comprises a plurality of seats 204 each of which is apt to house or accommodate within it at least partially an injector. According to this aspect, the number of seats 204 is equal to the number of injectors. The shell body 21 is thus configured such that each injector 100 of the plurality of injectors can be at least partially received within a respective seat 204. Each injector 100 of the plurality of injectors is thus, at least in part, protected by the shell body 21. In particular, where the plurality of injectors 100 are arranged along a straight line, i.e. in a row, the shell body 21 may comprise a plurality of seats 204 also arranged in a straight line. Alternatively, where the plurality of injectors 100 are arranged in a zig-zag pattern or offset from a straight line the shell body 21 may comprise a plurality of seats 204 arranged in the same manner.

According to this preferred aspect, the shell body 21 is a hollow box-like body having an inner wall 203 defining the plurality of seats 204. That is, the shell body 21 is configured as a hollow box-like body in that it is traversed by a plurality of seats 204. Each seat 204 is preferably configured as a through hole within the shell body 21. Each seat 204 is delimited, i.e. enclosed, by the inner wall 203 of the shell body 21. Even more preferably, each seat 204 is shaped to achieve a form coupling with the at least one injector 100. In other words, each seat 204 is shaped to be complementary to each injector 100 that it must, at least partially, accommodate or receive within it. In particular, each seat 204 may have a cylindrical conformation. Other different conformations may be provided for the inner wall 203, and consequently, for each seat 204. In particular, such different conformations are a function of the shape of each injector 100 that must be received, at least in part, within the respective seat 204.

According to a preferred aspect of the present invention, the inner wall 203 is further configured to be interposed between the cooling circuit 22 and each injector 100 and has a minimum thickness of about 3-4 mm. That is, the minimum thickness is preferably comprised between 3 mm and 4 mm. In this way, the risk of a crack propagating up to reaching the cooling circuit 22 is limited, but sufficient heat exchange between each injector 100 and the cooling circuit 22 is ensured. That is, the inner wall 203 is configured to distance the cooling circuit 22 with respect to each injector 100. Thus, the inner wall 203 acts as a partition wall between each injector 100 and the cooling circuit 22 with which the cover assembly 20 is provided. In other words, the inner wall 203 is apt to hinder or prevent a direct contact between the cooling circuit 22 and each injector 100. That is, it follows that the cooling circuit 22 neither laps nor is in direct contact with each injector 100.

According to a further preferred aspect, each injector 100 is fully accommodated or housed within the respective seat 204 in the shell body 21. In particular, each injector 100 is "flush" or "at the same level" with a free edge of said seat 204. Alternatively, each injector 100 partially overhangs from the seat 204. That is, each injector 100 may be partially exposed outside the shell body 21. That is, each injector 100 may, in part, protrude or overhang outside the shell body through the seat 204.

The shell body 21 further comprises, according to a further preferred aspect, an upper wall 206 intended to face the melting chamber 902 of the tank 90. In other words, the upper wall 206 is intended to face towards the melting chamber 902. Therefore, in use, the upper wall 206 may be in direct contact with the molten bath. This happens, in particular, when the burner 1 acts as a submerged burner.

Preferably, the shell body 21 further comprises a lower wall 207 opposite to the upper wall 206. The lower wall 207 is configured to be placed in contact with, or to lie against or abut against, the base 110 of the injection assembly 10. The inner wall 203 extends, therefore, between the upper wall 206 and the lower wall 207. It follows that each seat 204 is, therefore, configured as a through hole developing between the upper wall 206 and the lower wall 207.

The shell body 21 further comprises, according to a further preferred aspect, a plurality of side walls 205 intended to be associated with a wall 901 of the tank 90. In other words, the plurality of side walls 205 of the shell body 21 are, in use, placed in contact with a wall 901 of the tank 90. In particular, the side walls 205 may, in use, be in contact with a housing seat in a wall 901 of the tank 90.

According to a further preferred aspect, the shell body 21 further comprises a perimeter flange 209. Said perimeter flange 209 extends, i.e. protrudes or projects, perimeterally from the side walls 205 and lies on the same plane as the lower wall 207. In other words, the perimeter flange 209 surrounds the side walls 205. The perimeter flange 209 may be provided with a plurality of through-holes 210 to allow the insertion of threaded fixing elements, known per se, to reversibly couple the shell body 21 to a wall 901 of the tank 90.

The cooling circuit 22, according to a preferred aspect, is a water jacket. In other words, the cooling circuit 22 comprises one or more interconnected channels or interconnected compartments made within the shell cover 21 configured to be traversed by a flow of water or other cooling fluid. The cooling circuit 22 is configured to be fluidically connected to the cooling system of the furnace 9 for vitrifiable materials. In other words, the cooling circuit 22 comprises a plurality of channels or compartments made between the inner wall 203 and the side walls 205 of the shell body 21.

Preferably, the side walls 205, the upper wall 206 and the lower wall 207 are flat. Alternatively, the upper wall 206 may have a substantially V-shaped profile, the vertex of which is located at the seat 204. In other words, the upper wall 206 may comprise a first portion 206a and a second portion 206b, lying in incident planes, to form said V-shaped profile. Said still differently, the first portion and the second portion of the upper wall 206 may both be sloping, or inclined, towards the seat 204.

Even more preferably, for simplicity of construction, at least the side walls 205 and the lower wall 207 are orthogonal to each other.

According to a further preferred aspect, the shell body 21 comprises a plurality of ribs 208 that protrude or project from the upper wall 206. In other words, said ribs 208 extend from the upper wall 206 and are intended, in use, to face towards the melting chamber 902. Preferably, the ribs 208 extend orthogonally with respect to the upper wall 206. Preferably, further, the ribs 208 extend between a first free edge and a second free edge, opposite to the first free edge, of the upper wall 206. Or, the ribs 208 extend between a first free edge and a second free edge, opposite to the first free edge, of the first portion and the second portion of the upper wall 206.

The ribs 208 act as elements for retaining the devitrified material, which at the time of activation of the furnace for vitrifiable materials 9 tends to develop in contact with the burner, particularly if said burner 1 acts as a submerged burner. In this case, in fact, shortly after the ignition of the furnace 9 for vitrifiable materials, the part of the molten bath which comes into contact with the upper wall 206 of the shell 21, cooled by means of the cooling circuit 22, undergoes, due to the difference in temperature with said upper wall 206, a phenomenon of devitrification as a result of which it solidifies. As a result of this phenomenon, a layer of devitrified material is formed on the upper wall 206 of the shell body 21. Since such a layer of devitrified material has a high thermal insulating power it acts as a protective element of the upper wall 206 of the shell body 21. The presence of said ribs 208 contributes to the stabilization of the layer of devitrified material on the upper wall 206 of the shell body 21, preventing the risk of detachment thereof.

The layer of devitrified material may also be formed near or around the communication mouth 105 of each injector 100. In particular, in the case where each 100 partially overhangs from the shell body 21, the devitrified material formed on the latter around or close to the overhanging portion of the injector 100 contributes to protecting the injector 100 against the direct contact with the molten bath.

According to a further preferred aspect, the shell body 21 comprises a plurality of parts or sub-bodies 21a, 21b configured to reversibly associate with each other. In other words, the shell body 21 may be configured as an assembly of a plurality of parts or sub-bodies 21a, 21b that can be reversibly assembled to form a single or individually manipulable piece. Said differently, the shell body 21 may be made by reversibly assembling multiple parts 21a, 21b or sub-bodies with each other. Such parts or sub-bodies 21a, 21b may be, for example for simplicity of construction and assembly, symmetrical to each other.

In particular, according to a further preferred aspect further, if the plurality of injectors 100 are arranged in a straight line, the ribs 208 on the upper wall 206 are arranged so as to be incident to the straight line along which the injectors 100 are arranged. That is, the ribs 208 are arranged transverse to the straight line along which or with respect to which the injectors are positioned offset. Even more preferably, the ribs 208 are arranged orthogonally with respect to the straight line along which or with respect to which the injectors 101 are arranged offset. In addition, preferably, the ribs 208 may be parallel to each other. Even more preferably, the ribs 208 are equally spaced from each other.

According to a further preferred aspect, the burner 1 further comprises an adjusting element 102 housed in the combustion chamber 101 of each injector 100 and configured to engage at least partially said combustion chamber 101 to vary a hollow space or free space of the combustion chamber 101. The free space is the space interposed, i.e., included, between the communication mouth 105 and the adjusting element 102. Thus, free space, or hollow space, means the region or portion of the combustion chamber 101 in communication with the melting chamber 902 and not engaged by the adjusting element 102. In still other words, the free space, or hollow space, is defined as the region or portion of the combustion chamber 101 that is open towards the melting chamber 902 and lacking the adjusting element 102. The free space or hollow space of the combustion chamber 101 is thus the portion or region within which the flame develops. The size of the free space or hollow space is therefore a function of the distance of the adjusting element 102 from the communication mouth 105 of the combustion chamber 101.

According to a further preferred aspect, each combustion chamber 101 extends mainly along a longitudinal direction h. Preferably, said longitudinal direction h is a direction substantially orthogonal to the wall 901 of the tank 90, with which the burner 1 is intended in use to be associated. Furthermore, according to this same preferred aspect, the adjusting element 102 is apt to occupy a first position along the longitudinal direction h and at least a second position along the longitudinal direction h, wherein the first position is associated with a first dimension of said free space of the combustion chamber 101 and the second portion is associated with a second dimension of said free space of the combustion chamber 101. In other words, the adjusting element 102 may occupy a first position and at least a second position within the combustion chamber 101 to determine a first dimension of the hollow space or free space and a second dimension of the hollow space or free space, respectively. Therefore, that is, the burner 1 is configured such that the dimension of the free space or hollow space is variable depending on the position occupied by the adjusting element 102.

The smaller the dimension of the free space or hollow space, the smaller the distance between the generated flame and the melting chamber 902. Thus, depending on the position of the adjusting element with respect to the communication mouth 105 of the melting chamber 101, it is possible to adjust the distance of the flame from the melting chamber 902. This is particularly advantageous since, depending on the composition of the molten bath, it may be useful to adjust the contact or proximity of the flame with the vitrifiable material. Advantageously, it is therefore possible to vary the distance of the flame from the melting chamber 902 between a first melting cycle and a second melting cycle according to the composition of the vitrifiable material to be melted.

According to a preferred aspect, further, one of said first position and second position of the adjusting element 102 may be a closure position, i.e., a position in which the adjusting element 102 prevents a fluid communication with the combustible feeding circuit 40 and the oxidant feeding circuit 30. That is, the adjusting element 102 is apt to assume a closure position in which it closes or interrupts at least one fluid communication between said combustion chamber 101 and the oxidant feeding circuit 30 and the combustible feeding circuit 40. In other words, the adjusting element 102 is apt to close a fluid communication between the combustion chamber 101 the oxidant feeding circuit 30 and the combustible feeding circuit 40. More specifically, the adjusting element 102 may assume a position such that the fluid communication between the combustion chamber 101, the combustible inlet 401, and the oxidant inlet 301 is prevented or closed. This is particularly useful if the burner 1 acts as a submerged burner. In this way, it is completely prevented that part of the molten bath may leak or enter or penetrate inside the combustion chamber 101, and possibly solidify within said inlets 301, 401.

Even more preferably, said closure position is a position in which the adjusting element 102 further prevents the fluid communication between the combustion chamber 101 and the melting chamber 902. That is, the adjusting element 102 is configured to fully engage the combustion chamber 101 so as to prevent a fluid communication with the melting chamber 902, as well. In other words, the adjusting element 102 is configured to fully occupy the combustion chamber 101 until the communication mouth 105 is closed. This is particularly useful if the burner 1 acts as a submerged burner. In this way, it is completely prevented that part of the molten bath may leak or enter or penetrate the inside of the combustion chamber 101, and possibly solidify therein.

Even more preferably, in the closure position said adjusting element 102 protrudes, at least partially, from the combustion chamber 101 into the melting chamber 902. That is, the adjusting element 102 is configured such that, in the closure position, it extends partially within the melting chamber 902. In other words, at least part of the adjusting element 102, in the closure position, extends within the melting chamber 902.

According to a further preferred aspect, each injector 100 comprises a tubular body 103 that extends, or develops, mainly along the longitudinal direction h. That is, the tubular body defining each injector 100 has a prevailing dimension in the longitudinal direction h. In other words, the at least one injector 100 is a hollow body, that is, having a through hole arranged axially through the same body. Each injector 100 thus has an outer surface and an opposite inner surface, which develop along a main dimension coinciding with said longitudinal direction h. The combustion chamber 101 is defined as the volume subtended by the inner surface of the injector 100. The tubular body 103 according to the present invention may have a circular or polygonal cross-section. In other words, a tubular body 103 means, for example, a hollow cylinder, a hollow prism, or a hollow parallelepiped.

Even more preferably, each injector 100 is defined as a cylindrical jacket body which develops mainly along the longitudinal direction h. That is, each injector 100 comprises a cylindrical body extending mainly along the longitudinal direction h and having a through hole arranged axially through the cylindrical body. The combustion chamber 101 is defined as the through hole arranged axially through the cylindrical body 103. The combustion chamber 101, therefore, is defined as a preferably cylindrical slit or cavity arranged axially within the tubular body, having a diameter equal to the inner diameter of the hollow tubular body 103. That is, the combustion chamber 101 has, also a main direction of development, along said longitudinal direction h.

In such a manner, each injector 100 may be constructed as a hollow tubular body 103 extending mainly along the longitudinal direction and having for example, a polygonal cross-section. The combustion chamber 101 may be, otherwise, defined as a slit or cavity having a polygonal section and developing axially along said tubular body 103.

According to this same preferred aspect, the adjusting element 102 comprises, or consists of, a stem 107 slidable axially within said combustion chamber 101. Preferably, the stem 107 extends between a head end 107a, facing towards the communication mouth 105, and an opposite bottom end 107b. That is, the stem 107 also develops mainly along the longitudinal direction h between said two ends 107a, 107b. The stem is received at least partially within the through hole of the injector 100, thus within the combustion chamber 101, and is apt to translate within the latter. The stem 107, therefore, may move between at least a first position and a second position within the through hole, i.e., within the combustion chamber 101. According to this preferred aspect, therefore, the free space is defined as the volume comprised between the inner surface of the injector 100 and the head end 107a of the stem 107. In other words, the free space is equal to the volume of the combustion chamber 101 comprised between the communication mouth 105 and the head end 107a of the stem 107. The free space is thus closed or delimited on one side by the head end 107a of the stem 107. Thus, a translation of the stem 107 within the combustion chamber 101 corresponds to a change in the size of the free or hollow space. The stem 107 is thus configured to translate along the longitudinal direction h in order to occupy, within the combustion chamber 101, a first and at least a second position. Thus, a translation of the stem 107 along the longitudinal direction h, changes the distance of the flame from the melting chamber 902.

According to this same preferred aspect, further, the head end 107a of the stem 107 may have a tapered or flat configuration. In other words, the head end 107a of the stem 107 may have a sharp or pointed conformation or is substantially flat. According to a further preferred aspect, further, the bottom end 107b of the stem 107 may be threaded. In other words, the bottom end 107b of the stem 107 may have a sharp or pointed conformation or is substantially flat. Preferably, according to this same aspect, the combustion chamber 101 also comprises a counter-threaded portion to allow a roto-translation motion of the stem 107 within it.

According to a further preferred aspect, the adjusting element 102 is operable manually or automatically, for example by means of an electric or hydraulic motor. That is, the adjusting element 102 is activable manually, for example by an operator, or automatically by a motor. The displacement of the adjusting element 102 within each injector may be achieved by hand, or by connecting the same adjusting element 102 with a motor, such as an electric or pneumatic motor. Thus, the position of the adjusting element 102 within the injection chamber 101 is controllable automatically or manually.

According to a preferred aspect, the adjusting element 102 of each injector 100 is movable independently of the adjusting element 102 of the other injectors 100 or is movable together with the adjusting element 102 of the other injectors 100. That is, the position assumed by an adjusting element 102 may or may not be independent with respect to the other adjusting elements 102. In other words, each adjusting element 102 may be activated individually or separately; or alternatively, each adjusting element 102 may be activated only together with the other adjusting elements 102.

According to a preferred aspect, the shell body 21 and/or the injection assembly 10 and/or each injector 100 may be made of a refractory metal alloy. In particular, the shell body 21 and/or the injection assembly 10 and/or each injector 100 may be made of austenitic stainless steel (e.g., AISI 310-310S), or of an iron-chromium-aluminum alloy (e.g., Kanthal^{®} alloys) or of an austenitic nickel-chromium structure super alloy (e.g., Inconel^{®}). For example, according to the operating conditions to which the burner will be subjected in use, the shell body 21 and/or the injection assembly 10 and/or each injector 100 may be made of different materials from each other.

Finally, a process for managing a burner 1 as heretofore described is the subject matter of the present invention. In describing such a process, the elements of the burner 1 involved in the process and having the same function and the same structure as the elements previously described retain the same reference number and are not described again in detail.

In particular, said management process is implementable in a furnace 9 for vitrifiable materials comprising a tank 90 having a plurality of walls 901 defining a melting chamber 902.

According to the present invention, the aforesaid process comprises the steps of:
- making a fluid communication between a plurality of injectors 100 and said melting chamber 902 and generating a flame within the melting chamber 902 through said plurality of injectors 100,
- removably connecting said plurality of injectors 100 to a shell body 21 and at least partially surrounding the plurality of injectors 100 with said shell body 21,
- removably connecting said plurality of injectors 100 to one of the walls 901 defining said melting chamber 902 through a shell body 21,
- cooling the shell body 21 by circulating a cooling fluid;
- placing in fluid communication said plurality of injectors 100 with an oxidant feeding circuit 30 and a combustible feeding circuit 40;
- feeding said plurality of injectors 100 with oxidant and with combustible in a liquid or gaseous state.

In other words, the process comprises fluidically connecting each injector 100 of the plurality of injectors with the melting chamber 902 of a tank 90 so as to generate within the melting chamber 902 a plurality of flames, hence heat, to bring the vitrifiable material to melt.

According to the present invention, the process further allows protecting at least partially each injector 100 by surrounding it at least partially with a shell body 21. Further, the aforesaid method includes removably associating or coupling each injector 100 to one of the walls 901 through the shell body 21. Therefore, if case of need, the shell body 20 can then be removed from the wall 901 and from each injector 100. That is to say, if a malfunction of the burner 1 occurs, it is possible to disconnect the shell body 21 for example to check the integrity of the same burner 1. In use, the shell body 21 may be cooled by circulating a cooling fluid. In particular, cooling the shell body 21 may be accomplished by letting a cooling fluid, such as water, circulate or flow within a cooling circuit 22 of the shell body 21. In this, by contact or proximity between the shell body 21 and each injector 100, it is possible to cool the latter, as well.

In addition, the process includes the step of placing in fluid communication said each injector 100 with an oxidant feeding circuit 30 and a combustible feeding circuit 40 and the step of feeding said at least one injector 100 with oxidant and with combustible in a liquid or gaseous state. In other words, the process comprises feeding said each injector with oxidant and feeding each injector with combustible, as well. The combustible and the oxygen may be supplied to each injector in a liquid or gaseous state. Preferably, the combustible and the oxidant are supplied to each injector 100 in the cryogenic state. In this way, the temperature of each one injector 100 is lowered due to the addition of combustible and oxidant at a temperature significantly lower than the temperature to which each injector 100 is subjected due to proximity to the melting chamber 902 and by effect of the combustion from which the flame is generated. Furthermore, preferably the combustible and the oxidant are fed to each injector separately, i.e. individually or independently, from each other.

Preferably, the process may further comprise the steps of:
- removing the shell body 20 from the wall 901 and the plurality of injectors 100 in case of need for removal;
- at least partially replacing the shell body (21) removed with a new shell body (20) or a new portion of the shell body (21).

According to a preferred aspect, the process may further include the step of replacing the shell body 21 removed with a new shell body 21 or of at least partially replacing said shell body 21 with a corresponding new part of the shell body 21. That is, in case of need, it is possible to replace a damaged shell body 21 with a new shell body 21 and or it is possible to replace only a part of the damaged shell body 21 with a corresponding new part in order to restore the functionality of the burner 1. In other words, it is possible to selectively remove and replace only the shell body 21, or a part thereof, to restore the full functionality of the burner 1. It follows, therefore, that it is possible to restore the full operability of the burner 1 only by removing and replacing the shell body 21, or a part thereof while the other components of the burner 1 are preserved.

In addition, according to a preferred aspect, the process may include the step of: providing each injector 100 of the plurality of injectors with an adjusting element 102 and moving said adjusting element 102 inside at least one injector 100 to adjust the distance of the flame generated by said at least one injector 100 with respect to the melting chamber 902.

Finally, according to a preferred aspect, the process may also include moving the adjusting element 102 inside an injector 100 to close a fluid communication between said injector 100 and the melting chamber 902 and/or to close a fluid communication between said injector 100 and said oxidant feeding circuit 30 and said combustible feeding circuit 40. That is, the process may further include displacing the adjusting element 102 inside an injector 100 such that said adjusting element 102 is brought into a position so that a fluid communication between the at least one injector 100 and the melting chamber 902 is prevented and/or into a position where a fluid communication between the at least one injector 100 and the oxidant feeding circuit 30 and the combustible feeding circuit 40 is prevented.

The object of the present invention has so far been described with reference to the embodiments thereof. It is to be understood that there may be other embodiments which relate to the same invention.

## Claims

1. Burner (1) for a furnace (9) for vitrifiable materials, the furnace (9) comprising a tank (90) having one or more walls (901) defining a melting chamber (902), wherein said burner (1) comprises:
- a plurality of injectors (100) arranged to form a straight line or arranged offset from a straight line, wherein each injector is configured to generate, in use, a flame within said melting chamber (902),
- at least one base (110), wherein said plurality of injectors (100) is stably associated with the base to form an injection assembly (10),
- a cover assembly (20), comprising a shell body (21) and a cooling circuit (22), configured to allow the circulation of a cooling fluid within said shell body (21);
and wherein said shell body (21) removably surrounds at least part of each injector (100) and is removably associated with the injection assembly (10) and is apt to be associated with a wall (901) of the furnace (9) to allow a connection of each injector (100) with said wall (901) of the tank (90);
and wherein each injector (100) has a combustion chamber (101) configured to be in fluid communication with: said melting chamber (902) through a communication mouth (105), an oxidant feeding circuit (30) through an oxidant inlet (301), and a combustible feeding circuit (40) through a combustible inlet (401).

2. Burner (1) according to claim 1, wherein said shell body (21) comprises a plurality of seats (204) and wherein the number of seats (204) is equal to the number of injectors of said plurality of injectors (100) and wherein each seat (204) is apt to at least partially accommodate within itself an injector of said plurality of injectors (100).

3. Burner (1) according to claim 2, wherein said shell body (21) is a hollow box-like body having an inner wall (203) which delimits each seat (204), and wherein said inner wall (203) is configured to be interposed between the cooling circuit (22) and said at least one injector (100) and has a thickness of at least 3-4 mm.

4. Burner (1) according to claim 2 or 3, wherein said shell body (21) comprises a plurality of parts (21a, 21b) configured to be reversibly coupled together to obtain a single piece.

5. Burner (1) according to any one of the preceding claims, wherein said shell body (21) comprises an upper wall (206), intended in use to face the melting chamber (902) and a plurality of ribs (208) projecting from said upper wall (206).

6. Burner (1) according to claim 5, wherein said ribs (208) are incident with respect to said straight line.

7. Burner (1) according to any one of the preceding claims, comprising an adjusting element (102) housed in said combustion chamber (101) and configured to engage at least partially said combustion chamber (101) in order to vary a hollow space or free space of the combustion chamber (101).

8. Burner (1) according to claim 7, wherein said adjusting element (102) is apt to assume a closure position where it closes at least a fluid communication between said combustion chamber (101) and said oxidant feeding circuit (30) and said combustible feeding circuit (40).

9. Burner (1) according to claim 8, wherein in said closure position said adjusting element (102) protrudes at least partially from the combustion chamber (101) into the melting chamber (902).

10. Burner (1) according to any one of claims 7 to 9, wherein said at least one injector (100) comprises a tubular body (103) extending mainly along a longitudinal direction (h) and wherein said combustion chamber (101) is defined as a through hole arranged axially through the tubular body (103), and wherein said adjusting element (102) comprises a stem (107) slidable axially within said combustion chamber (101).

11. Burner (1) according to claim 10, wherein said stem (107) extends between a head end (107a) and an opposite bottom end (107b), wherein said head end (107a) faces towards the communication mouth (105), and can have a tapered or substantially flat configuration.

12. Burner (1) according to any one of claims 7 to 11, wherein said adjusting element (102) of each injector (100) is movable independently of the adjusting element (102) of the other injectors (100) or is movable together with the adjusting element (102) of the other injectors (100).

13. Burner (1) according to any one of the preceding claims, wherein said burner is a submerged burner.

14. Furnace (9) for vitrifiable materials comprising a tank (90) having one or more walls (901) defining a melting chamber (902) and a burner (1) according to any one of the preceding claims.

15. Furnace (9) for vitrifiable materials according to claim 14, wherein said burner (1) is associated with a wall (901) so that, in use, it is below the free surface of the molten vitrifiable material.

16. Furnace (9) for vitrifiable materials according to claim 14 or 15, comprising an oxidant feeding circuit (30) and a combustible feeding circuit (40) configured to supply respectively each injector (100) of the plurality of injectors of the at least one burner (1) with the oxidant and the combustible in a liquid state or in a gaseous state.

17. Process for managing a burner (1) according to any one of the preceding claims 1 to 13, in a furnace (9) for vitrifiable materials comprising a tank (90) having one or more walls (901) defining a melting chamber (902), wherein said process comprises the steps of:
- making a fluid communication between said plurality of injectors (100) and said melting chamber (902) and generating a flame within said melting chamber (902) through said plurality of injectors (100),
- removably connecting said plurality of injectors (100) to a shell body (21) and at least partially surrounding said plurality of injectors (100) with said shell body (21),
- removably connecting said plurality of injectors (100) to one of the walls (901) defining said melting chamber (902) through the shell body (21),
- cooling the shell body (21) by circulating a cooling fluid;
- placing in fluid communication said at least one injector (100) with an oxidant feeding circuit (30) and a combustible feeding circuit (40);
- feeding said plurality of injectors (100) with oxidant and with combustible in a liquid or gaseous state.

18. Process for managing a burner according to claim 17, further comprising the step of:
- removing the shell body (21) from said plurality of injectors (100) in case of need for removal;
- at least partially replacing the shell body (21) removed with a new shell body (21) or a new portion of the shell body (21).

19. Process for managing a burner according to any one of claims 17 or 18, further comprising the step of:
- providing, for each injector of said plurality of injectors, an adjusting element (102),
- moving said adjusting element (102) inside an injector (100) of said plurality of injectors to adjust the distance of the flame generated by said one injector (100) with respect to the melting chamber (902).

20. Process for managing a burner according to claim 19, further comprising the step of:
- moving said adjusting element (102) inside an injector (100) of said plurality of injectors to close at least one fluid communication between said one injector (100) and the melting chamber (902) and/or to close a fluid communication between said one injector (100) and said oxidant feeding circuit (30) and said combustible feeding circuit (40).

## Patentansprüche

1. Brenner (1) für einen Ofen (9) für verglasbare Stoffe, wobei der Ofen (9) einen Tank (90) mit mindestens einer Wand (901), die eine Schmelzkammer (902) definiert, umfasst, wobei der Brenner (1) umfasst:
- eine Vielzahl von Injektoren (100), die derart angeordnet sind, dass sie eine Gerade bilden oder von einer Geraden versetzt sind, wobei jeder Injektor derart konfiguriert ist, dass er im Einsatz im Inneren der besagten Schmelzkammer (902) eine Flamme erzeugt,
- mindestens eine Basis (110), wobei die besagte Vielzahl von Injektoren (100) stabil mit der Basis verbunden ist, um eine Injektionseinrichtung (10) zu bilden,
- eine Abdeckungseinrichtung (20), umfassend einen Hüllenkörper (21) und einen Kühlkreislauf (22), der derart konfiguriert ist, dass er den Umlauf einer Kühlflüssigkeit im Hüllenkörper (21) zulässt;
und wobei der besagte Hüllenkörper (21) mindestens einen Teil jedes Injektors (100) abnehmbar umgibt und mit der Injektionseinrichtung (10) abnehmbar verbunden ist und zur Verbindung mit einer Wand (901) des Ofens (9) geeignet ist, um eine Verbindung jedes Injektors (100) mit der besagten Wand (901) des Tanks (90) zu ermöglichen;
und wobei jeder Injektor (100) eine Brennkammer (101) aufweist, die derart konfiguriert ist, dass sie über eine Verbindungsmündung (105) mit der besagten Schmelzkammer (902), über eine eine Eintrittsöffnung (301) für Oxidationsmittel mit einem Zufuhrkreislauf (30) für Oxidationsmittel und über eine Eintrittsöffnung (401) für Brennstoff mit einem Zufuhrkreislauf (40) für Brennstoff fluidisch verbunden ist.

2. Brenner (1) nach Anspruch 1, wobei der besagte Hüllenkörper (21) eine Vielzahl von Sitzen (204) umfasst und wobei die Anzahl der Sitze (204) gleich der Anzahl der Injektoren der besagten Vielzahl von Injektoren (100) ist, und wobei jeder Sitz (204) geeignet ist, einen Injektor der besagten Vielzahl von Injektoren (100) mindestens teilweise in seinem Inneren unterzubringen.

3. Brenner (1) nach Anspruch 2, wobei der besagte Hüllenkörper (21) ein kammerartiger Hohlkörper mit einer jeden Sitz (204) abgrenzenden Innenwand (203) ist, und wobei die besagte Innenwand (203) derart konfiguriert ist, dass sie zwischen dem Kühlkreislauf (22) und dem besagten mindestens einen Injektor (100) angeordnet ist und eine Stärke von mindestens 3 - 4 mm aufweist.

4. Brenner (1) nach Anspruch 2 oder 3, wobei der besagte Hüllenkörper (21) eine Vielzahl von Teilen (21a, 21b) umfasst, die derart konfiguriert sind, dass sie reversibel miteinander gekoppelt werden können, um ein einzelnes Stück zu ergeben.

5. Brenner (1) nach irgendeinem der vorstehenden Ansprüche, wobei der besagte Hüllenkörper (21) eine Oberwand (206), die im Einsatz der Schmelzkammer (902) zugewandt sein soll, und eine Vielzahl von der besagten Oberwand (206) hervorstehender Rippen (208) umfasst.

6. Brenner (1) nach Anspruch 5, wobei die besagte Rippen (208) in Bezug auf die Gerade einfallen.

7. Brenner (1) nach irgendeinem der vorstehenden Ansprüche, umfassend ein in der besagten Brennkammer (101) untergebrachtes Anpassungselement (102), das derart konfiguriert ist, dass es mindestens teilweise in die besagte Brennkammer (101) eingreift, um einen Hohl- oder Freiraum der Brennkammer (101) zu variieren.

8. Brenner (1) nach Anspruch 7, wobei das besagte Anpassungselement (102) geeignet ist, eine Schließungsstellung einzunehmen, in der es mindestens eine fluidische Verbindung zwischen der besagten Brennkammer (101) und dem besagten Zufuhrkreislauf (30) für Oxidationsmittel und dem besagten Zufuhrkreislauf (40) für Brennstoff schließt.

9. Brenner (1) nach Anspruch 8, wobei das besagte Anpassungselement (102) in der besagten Schließungsstellung mindestens teilweise aus der Brennkammer (101) in die Schmelzkammer (902) hineinragt.

10. Brenner (1) nach irgendeinem der Ansprüche 7 bis 9, wobei der besagte mindestens eine Injektor (100) einen rohrförmigen Körper (103) umfasst, der sich hauptsächlich entlang einer Längsrichtung (h) erstreckt, und wobei die besagte Brennkammer (101) als eine axial durch den rohrförmigen Körper (103) hindurch verlaufende Durchgangsöffnung definiert ist, und wobei das besagte Anpassungselement (102) einen im Inneren der besagten Brennkammer (101) axial verschiebbare Schaft (107) umfasst.

11. Brenner (1) nach Anspruch 10, wobei der besagte Schaft (107) sich zwischen einem Kopfende (107a) und einem gegenüberliegenden Bodenende (107b) erstreckt, wobei das besagte Kopfende (107a) der Verbindungsmündung (105) zugewandt ist und eine sich verjüngende oder eine im Wesentlichen flache Konfiguration aufweisen kann.

12. Brenner (1) nach irgendeinem der Ansprüche 7 bis 11, wobei das besagte Anpassungselement (102) jedes Injektors (100) unabhängig vom Anpassungselement (102) der anderen Injektoren (100) beweglich ist oder zusammen mit dem Anpassungselement (102) der anderen Injektoren (100) beweglich ist.

13. Brenner (1) nach irgendeinem der vorstehenden Ansprüche, wobei es sich beim besagten Brenner um einen Tauchbrenner handelt.

14. Ofen (9) für verglasbare Stoffe, umfassend einen Tank (90) mit mindestens einer Wand (901), die eine Schmelzkammer (902) definiert, und einem Brenner (1) nach irgendeinem der vorstehenden Ansprüche.

15. Ofen (9) für verglasbare Stoffe nach Anspruch 14, wobei der besagte Brenner (1) derart mit einer Wand (901) verbunden ist, dass er sich im Einsatz unterhalb der freien Oberfläche des geschmolzenen verglasbaren Stoffs befindet.

16. Ofen (9) für verglasbare Stoffe nach Anspruch 14 oder 15, umfassend einen Zufuhrkreislauf (30) für Oxidationsmittel und einen Zufuhrkreislauf (40) für Brennstoff, die derart konfiguriert sind, dass sie jeweils jedem Injektor (100) der Vielzahl von Injektoren des mindestens einen Brenners (1) das Oxidationsmittel und den Brennstoff in flüssigem oder gasförmigem Zustand zuführen.

17. Verfahren zum Betreiben eines Brenners (1) nach irgendeinem der vorstehenden Ansprüche 1 bis 13 in einem Ofen (9) für verglasbare Stoffe, der einen Tank (90) mit mindestens einer eine Schmelzkammer (902) definierenden Wand (901) umfasst, wobei das besagte Verfahren die folgenden Schritte umfasst:
- Herstellen einer fluidischen Verbindung zwischen der besagten Vielzahl von Injektoren (100) und der Schmelzkammer (902) und Erzeugen einer Flamme im Inneren der besagten Schmelzkammer (902) durch die besagte Vielzahl von Injektoren (100),
- abnehmbares Verbinden der besagten Vielzahl von Injektoren (100) mit einem Hüllenkörper (21) und mindestens teilweises Umgeben der besagten Vielzahl von Injektoren (100) mit dem besagten Hüllenkörper (21),
- abnehmbares Verbinden der besagten Vielzahl von Injektoren (100) mit einer der die besagte Schmelzkammer (902) definierenden Wände (901) durch den Hüllenkörper (21),
- Abkühlen des Hüllenkörpers (21) durch Zirkulieren einer Kühlflüssigkeit;
- Herstellen einer fluidischen Verbindung zwischen dem besagten mindestens einen Injektor (100) und einem Zufuhrkreislauf (30) für Oxidationsmittel und einem Zufuhrkreislauf (40) für Brennstoff,
- Zuführen von Oxidationsmittel und Brennstoff in flüssigem oder gasförmigem Zustand zur besagten Vielzahl von Injektoren (100).

18. Verfahren zum Betreiben eines Brenners nach Anspruch 17, ferner umfassend die folgenden Schritte:
- gegebenenfalls Abnehmen des Hüllenkörpers (21) von der besagten Vielzahl von Injektoren (100);
- mindestens teilweises Ersetzen des abgenommenen Hüllenkörpers (21) durch einen neuen Hüllenkörpers (21) oder einen neuen Teil des Hüllenkörpers (21).

19. Verfahren zum Betreiben eines Brenners nach Anspruch 17 oder 18, ferner umfassend die folgenden Schritte:
- Bereitstellen eines Anpassungselements (102) für jeden Injektor der besagten Vielzahl von Injektoren,
- Bewegen des besagten Anpassungselements (102) im Inneren eines Injektors (100) der besagten Vielzahl von Injektoren, um den Abstand der vom besagten einen Injektor (100) erzeugten Flamme zur Schmelzkammer (902) anzupassen.

20. Verfahren zum Betreiben eines Brenners nach Anspruch 19, ferner umfassend den folgenden Schritt:
- Bewegen des besagten Anpassungselements (102) im Inneren eines Injektors (100) der besagten Vielzahl von Injektoren, um mindestens eine fluidische Verbindung zwischen dem besagten einen Injektor (100) und der Schmelzkammer (902) und/oder eine fluidische Verbindung zwischen dem besagten einen Injektor (100) und dem besagten Zufuhrkreislauf (30) für Oxidationsmittel und dem besagten Zufuhrkreislauf (40) für Brennstoff zu schließen.

## Revendications

1. Brûleur (1) pour un fourneau (9) pour matériaux vitrifiables, le fourneau (9) comprenant un réservoir (90) ayant une ou plusieurs parois (901) définissant une chambre de fusion (902), dans lequel ledit brûleur (1) comprend :
- une pluralité d'injecteurs (100) agencés pour former une ligne droite ou agencés en décalé par rapport à une ligne droite, dans lequel chaque injecteur est configuré pour générer, en utilisation, une flamme à l'intérieur de ladite chambre de fusion (902),
- au moins une base (110), dans lequel ladite pluralité d'injecteurs (100) est associée de manière stable à la base afin de former un ensemble d'injection (10),
- un ensemble couvercle (20) comprenant un corps d'enveloppe (21) et un circuit de refroidissement (22), configuré pour permettre la circulation d'un fluide de refroidissement à l'intérieur dudit corps d'enveloppe (21) ;
et dans lequel ledit corps d'enveloppe (21) entoure de manière amovible au moins une partie de chaque injecteur (100) et est associé de manière amovible avec l'ensemble d'injection (10) et est apte à être associé à une paroi (901) du fourneau (9) pour permettre un raccordement de chaque injecteur (100) avec ladite paroi (901) du réservoir (90) ;
et dans lequel chaque injecteur (100) a une chambre de combustion (101) configurée pour être en communication fluidique avec : ladite chambre de fusion (902) à travers une bouche de communication (105), un circuit d'alimentation en oxydant (30) à travers une entrée d'oxydant (301) et un circuit d'alimentation en combustible (40) à travers une entrée de combustible (401).

2. Brûleur (1) selon la revendication 1, dans lequel ledit corps d'enveloppe (21) comprend une pluralité de sièges (204) et dans lequel le nombre de sièges (204) est égal au nombre d'injecteurs de ladite pluralité d'injecteurs (100) et dans lequel chaque siège (204) est apte à accueillir partiellement à l'intérieur de celui-ci un injecteur de ladite pluralité d'injecteurs (100).

3. Brûleur (1) selon la revendication 2, dans lequel ledit corps d'enveloppe (21) est un corps creux de type boîte ayant une paroi interne (203) qui délimite chaque siège (204), et dans lequel ladite paroi interne (203) est configurée pour être interposée entre le circuit de refroidissement (22) et ledit au moins un injecteur (100) et a une épaisseur d'au moins 3-4 mm.

4. Brûleur (1) selon la revendication 2 ou 3, dans lequel ledit corps d'enveloppe (21) comprend une pluralité de parties (21a, 21b) configurées pour être couplées ensemble de manière réversible pour obtenir une seule pièce.

5. Brûleur (1) selon l'une quelconque des revendications précédentes, dans lequel ledit corps d'enveloppe (21) comprend une paroi supérieure (206), censée faire face en utilisation à la chambre de fusion (902) et une pluralité de nervures (208) faisant saillie de ladite paroi supérieure (206).

6. Brûleur (1) selon la revendication 5, dans lequel lesdites nervures (208) sont incidentes par rapport à ladite ligne droite.

7. Brûleur (1) selon l'une quelconque des revendications précédentes, comprenant un élément d'ajustement (102) logé dans ladite chambre de combustion (101) et configuré pour se mettre en prise au moins partiellement avec ladite chambre de combustion (101) afin de modifier un espace creux ou espace libre de la chambre de combustion (101).

8. Brûleur (1) selon la revendication 7, dans lequel ledit élément d'ajustement (102) est apte à prendre une position de fermeture où il ferme au moins une communication fluidique entre ladite chambre de combustion (101) et ledit circuit d'alimentation en oxydant (30) et ledit circuit d'alimentation en combustible (40).

9. Brûleur (1) selon la revendication 8, dans lequel dans ladite position de fermeture ledit élément d'ajustement (102) fait saillie au moins partiellement de la chambre de combustion (101) dans la chambre de fusion (902).

10. Brûleur (1) selon l'une quelconque des revendications 7 à 9, dans lequel ledit au moins un injecteur (100) comprend un corps tubulaire (103) s'étendant principalement le long d'une direction longitudinale (h) et dans lequel ladite chambre de combustion (101) est définie comme un trou traversant agencé axialement à travers le corps tubulaire (103), et dans lequel ledit élément d'ajustement (102) comprend une tige (107) pouvant coulisser axialement à l'intérieur de ladite chambre de combustion (101).

11. Brûleur (1) selon la revendication 10, dans lequel ladite tige (107) s'étend entre une extrémité de tête (107a) et une extrémité de fond opposée (107b), dans lequel ladite extrémité de tête (107a) est orientée vers la bouche de communication (105) et peut avoir une configuration conique ou sensiblement plate.

12. Brûleur (1) selon l'une quelconque des revendications 7 à 11, dans lequel ledit élément d'ajustement (102) de chaque injecteur (100) est mobile indépendamment de l'élément d'ajustement (102) des autres injecteurs (100) ou est mobile en conjugaison avec l'élément d'ajustement (102) des autres injecteurs (100).

13. Brûleur (1) selon l'une quelconque des revendications précédentes, dans lequel ledit brûleur est un brûleur immergé.

14. Fourneau (9) pour matériaux vitrifiables comprenant un réservoir (90) ayant une ou plusieurs parois (901) définissant une chambre de fusion (902) et un brûleur (1) selon l'une quelconque des revendications précédentes.

15. Fourneau (9) pour matériaux vitrifiables selon la revendication 14, dans lequel ledit brûleur (1) est associé à une paroi (901) de sorte que, en utilisation, il est en dessous de la surface libre du matériau vitrifiable fondu.

16. Fourneau (9) pour matériaux vitrifiables selon la revendication 14 ou 15, comprenant un circuit d'alimentation en oxydant (30) et un circuit d'alimentation en combustible (40) configurés pour fournir respectivement à chaque injecteur (100) de la pluralité d'injecteurs de l'au moins un brûleur (1) l'oxydant et le combustible dans un état liquide ou un état gazeux.

17. Procédé de gestion d'un brûleur (1) selon l'une quelconque des revendications 1 à 13 précédentes, dans un fourneau (9) pour matériaux vitrifiables comprenant un réservoir (90) ayant une ou plusieurs parois (901) définissant une chambre de fusion (902), dans lequel ledit procédé comprend les étapes consistant à :
- établir une communication fluidique entre ladite pluralité d'injecteurs (100) et ladite chambre de fusion (902) et générer une flamme à l'intérieur de ladite chambre de fusion (902) à travers ladite pluralité d'injecteurs (100),
- raccorder de manière amovible ladite pluralité d'injecteurs (100) à un corps d'enveloppe (21) et entourer ladite pluralité d'injecteurs (100) au moins partiellement dudit corps d'enveloppe (21),
- raccorder de manière amovible ladite pluralité d'injecteurs (100) à l'une des parois (901) définissant ladite chambre de fusion (902) à travers le corps d'enveloppe (21),
- refroidir le corps d'enveloppe (21) par circulation d'un fluide de refroidissement ;
- mettre en communication fluidique ledit au moins un injecteur (100) avec un circuit d'alimentation en oxydant (30) et un circuit d'alimentation en combustible (40) ;
- alimenter ladite pluralité d'injecteurs (100) en oxydant et en combustible dans un état liquide ou gazeux.

18. Procédé de gestion d'un brûleur selon la revendication 17, comprenant en outre l'étape consistant à:
- retirer le corps d'enveloppe (21) de ladite pluralité d'injecteurs (100) en cas de nécessité de retrait ;
- remplacer au moins partiellement le corps d'enveloppe (21) retiré par un nouveau corps d'enveloppe (21) ou une nouvelle partie du corps d'enveloppe (21).

19. Procédé de gestion d'un brûleur selon l'une quelconque des revendications 17 ou 18, comprenant en outre l'étape consistant à:
- fournir, pour chaque injecteur de ladite pluralité d'injecteurs, un élément d'ajustement (102),
- déplacer ledit élément d'ajustement (102) à l'intérieur d'un injecteur (100) de ladite pluralité d'injecteurs afin d'ajuster la distance de la flamme générée par ledit un injecteur (100) par rapport à la chambre de fusion (902).

20. Procédé de gestion d'un brûleur selon la revendication 19, comprenant en outre l'étape consistant à:
- déplacer ledit élément d'ajustement (102) à l'intérieur d'un injecteur (100) de ladite pluralité d'injecteurs pour fermer au moins une communication fluidique entre ledit un injecteur (100) et la chambre de fusion (902) et/ou pour fermer une communication fluidique entre ledit un injecteur (100) et ledit circuit d'alimentation en oxydant (30) et ledit circuit d'alimentation en combustible (40).
